# EUROPEAN PATENT SPECIFICATION

(11) **EP 3 321 144 B1**
(45) Date of publication and mention of the grant of the patent: **10.03.2021**
(21) Application number: 17197251.6
(22) Date of filing: 19.10.2017
(51) Int. Cl.: B60T 8/1755, B60T 8/1766

(54) **SYSTEM AND METHOD FOR DISTRIBUTING A BRAKING TORQUE OF A VEHICLE AND A VEHICLE INCLUDING THE SYSTEM**
SYSTEM UND VERFAHREN ZUR VERTEILUNG EINES BREMSMOMENTS EINES FAHRZEUGES UND FAHRZEUG MIT DEM SYSTEM
SYSTÈME ET PROCÉDÉ PERMETTANT DE RÉPARTIR UN COUPLE DE FREINAGE D'UN VÉHICULE ET VÉHICULE COMPRENANT CE SYSTÈME

(30) Priority: 15.11.2016 SE 1651489
(43) Date of publication of application: 16.05.2018
(73) Proprietor: Scania CV AB, 151 87 Södertälje (SE)
(72) Inventor: ROOS, Per, 153 36 Järna (SE); GILLE, Magnus, 647 30 Mariefred (SE)
(74) Representative: Scania CV AB

(56) References cited:
- EP-A1- 1 849 745
- US-A1- 2005 264 102
- US-A1- 2010 211 280
- US-A1- 2010 312 447
- US-A1- 2016 236 672

## Description

### Technical field

The present invention relates to techniques in the context of vehicles, and in particular to a system and method for distributing a braking torque between the wheels in a vehicle arranged with a service braking system and at least one auxiliary braking system.

### Background

The concept 'steering-by-braking' is a fast-growing technology for use in autonomous or semi-autonomous applications. It is a cheap and simple solution for lateral vehicle control that can be used either as a fall back to e.g. a primary active steering mechanism or as the only mechanism for lateral control for Advanced Driver Assistance Systems, ADAS, functions, such as e.g. Lane Keep Assist, LKA, i.e. a system helping the driver to keep the vehicle inside lane markings.

Many heavy goods vehicles such as buses, trucks, loaders and mining vehicles are today equipped with multiple braking systems. A service braking system is the vehicle's principal braking system. To support the service braking system auxiliary braking systems are used. The service braking system typically uses traditional disc brakes and/or drum brakes placed at the vehicle's wheels.

To be able to brake individual wheels is essential for the steering-by-braking functionality. Modern service braking systems such as Electronic Braking systems, EBS, can be commanded to electronically distribute the braking force unevenly between the wheel brakes of the individual wheels. Therefore, using the wheel brakes of the service braking system is a common solution for achieving steering-by-braking. However, the wheel brakes on a heavy vehicle wear down fast and gets overheated when used frequently. They are also expensive to replace. Furthermore, when using wheel brakes, the braking torque is wasted energy that gets lost as heat.

Different methods for steering or guiding a vehicle using wheel braking devices are known. US2004262991 discloses a method for controlling yaw including determining a vehicle yaw rate and desired yaw rate, calculating a yaw rate error, determining a control yaw moment using a sliding mode control law based on a lumped mass vehicle model, selecting one of the braking devices based on a vehicle yaw condition, determining a control command based on the control yaw moment, and communicating the control command to one of the selected braking devices.

An alternative solution is disclosed in JP2000190829, disclosing a vehicle where retarders H1, H2, H3, H4 serving as auxiliary brakes are individually fitted to the wheels. The retarders H1, H2, H3, H4 are independently controlled by a control device. Since the retarders H1, H2, H3, H4 independently braking the wheels W1, W2, W3, W4 are individually fitted to the wheels of the vehicle, yaw control can be conducted

Other examples of systems and methods for steering and guiding a vehicle by acting on service braking system and auxiliary braking system are discloses in documents US2010/211280 A1, US2005/264102 A1, EP1849745 A1 and US2010/312447 A1.

### Summary

It is an object of the invention to alleviate at least some of the drawbacks with the prior art. It is a further object to provide a system to distribute braking force between wheels of the vehicle, while avoiding problems of wear down and overheating. It is a still further object to provide a system by which the vehicle can be steered by braking, while avoiding problems of wear down and overheating, and wherein the braking torque is not wasted energy. A further object is to provide a solution where already existing components are reused as much as possible. These object and others are at least partly achieved by the system and the method according to the independent claims, and by the embodiments according to the dependent claims.

According to one aspect, the invention relates to a system for distributing a braking torque of a vehicle arranged with a service braking system, and at least one auxiliary braking system arranged to generate a braking torque. The system includes a coupling mechanism and a control unit. The coupling mechanism is arranged to couple and decouple at least one wheel of the vehicle from the braking torque. The control unit is configured to obtain distribution data indicative of a desired distribution of the braking torque between the wheels of the vehicle, to control the at least one auxiliary braking system to generate the braking torque on the propulsion shaft based on the distribution data and to control the coupling mechanism to decouple at least one wheel of the vehicle from the braking torque of the at least one auxiliary braking system, based on the distribution data, in order to distribute the braking torque to the other wheels of the vehicle.

By providing a system for distribution of a centrally generated braking torque, an auxiliary braking system may be used also in applications where it is essential to brake individual wheels, such as in steering by braking applications. The system might also enable extended use of the auxiliary braking system e.g. on slippery roads.Hence, drawbacks associated with using the service braking system can be avoided.

According to the invention, the control unit is arranged to determine control data based on at least one predetermined rule for the distribution data, and to control the at least one braking system and the coupling mechanism in accordance with the control data.

According to the invention, the control unit is arranged to obtain the distribution data indicating a steering direction of the vehicle wherein the control unit is configured to determine control data in order to control the coupling mechanism to distribute the braking torque such that the vehicle is steered in accordance with the steering direction.

Thereby, steering could be achieved with a centralized braking actuator. The above-mentioned disadvantages in steering by braking (listed above) would not be applicable in such solution, as the needed (per wheel) braking torque is consumed by a centralized braking actuator where braking force can be applied without wear down the wheel brakes.

According to the invention, the control unit is arranged to determine control data in order to control the coupling mechanism to decouple at least one wheel of the vehicle arranged on an outside of the vehicle from the braking force, in order to steer the vehicle in the steering direction. The outside of the vehicle is defined with reference to the indicated steering direction of the vehicle.

According to some embodiments, the control unit is arranged to determine control data in order to control the coupling mechanism to decouple all wheels of the vehicle arranged on the outside of the vehicle from the braking force, in order to steer the vehicle in the steering direction.

According to some embodiments, the control unit is configured to determine control data indicating a combined distribution of a braking force from the service braking system and the braking force from the at least one auxiliary braking system in order to steer the vehicle in the steering direction. The control unit is then further configured to control the service braking system, the at least one auxiliary braking system and/or the coupling mechanism in accordance with the determined combined distribution.

According to some embodiments, wherein the control unit is configured to determine control data indicating a time period Δt during which the braking force from the at least one auxiliary braking system is distributed, based on the distribution data. The control unit is then further configured to control the at least one auxiliary braking system to distribute the braking force during the time period Δt.

According to some embodiments, the control unit includes a model of the vehicle, and is further configured to determine the control data based on the model.

According to some embodiments, the coupling mechanism includes at least one differential and/or a coupling.

According to some embodiments, the distribution data includes at least one of: a steering direction, a steering angle, a vehicle speed, data from the service braking system, data from the auxiliary braking system, data indicating a position of the vehicle, an altitude parameter, map data or data indicating a desired stability of the vehicle.

According to a second aspect, the invention relates to a vehicle including a wheel suspension arrangement for suspending a plurality of wheels, a propulsion shaft, a service braking system, at least one auxiliary braking system arranged to generate a braking torque acting on the propulsion shaft and a system as described above.

According to a third aspect, the invention relates to a method for distributing a braking torque of a vehicle arranged with a service braking system, and at least one auxiliary braking system arranged to generate a braking torque acting on a propulsion shaft of the vehicle. The method includes obtaining distribution data indicative of a desired distribution of the braking torque between the wheels of the vehicle, generating the braking torque on the propulsion shaft from the at least one auxiliary braking system based on the distribution data, and decoupling at least one wheel of the vehicle from the braking torque of the at least one auxiliary braking system based on the distribution data, whereby the braking torque is distributed to the other wheels of the vehicle.

According to the invention, the method includes determining control data based on at least one predetermined rule for the distribution data, and generating the braking torque on the propulsion shaft and decoupling the at least one wheel of the vehicle from the braking force in accordance with the control data.

According to the invention, the distribution data indicates a steering direction of the vehicle, and then the method includes determining control data indicating a distribution of the braking torque corresponding to the steering direction, and wherein the decoupling includes distributing the braking torque in accordance with the control data.

According to the invention, the determining includes determining control data for decoupling at least one wheel of the vehicle arranged on an outside of the vehicle with reference to the indicated steering direction of the vehicle from the braking force.

According to some embodiments, the determining includes determining control data for decoupling all wheels of the vehicle arranged on the outside of the vehicle with reference to the indicated steering direction of the vehicle, from the braking force.

According to some embodiments, the determining includes determining control data indicating a combined distribution of a braking force from the service braking system and the braking force from the at least one auxiliary braking system, and controlling the service braking system, the at least one auxiliary braking system and/or the coupling mechanism in accordance with the determined combined distribution.

According to some embodiments, the method includes determining control data indicating a time period Δt during which the braking force from the at least one auxiliary braking system is distributed, based on the distribution data, and distributing the braking force during the time period Δt.

According to some embodiments, the method includes determining the control data based on a model of the vehicle.

According to some embodiments, the method includes determining control data based on at least one of: a steering direction, a steering angle, a vehicle speed, data from the service braking system, data from the auxiliary braking system, data indicating a position of the vehicle, an altitude parameter, map data or data indicating a desired stability of the vehicle.

According to a fourth aspect, the invention relates to a computer program P, wherein the computer program P includes a computer program code to cause a control unit, or a computer connected to the control unit, to perform the method described above and below.

According to a fifth aspect, the invention relates to a computer program product comprising a computer program code stored on a non-transitory computer-readable medium to perform the method steps according to any of the described above and below, when the computer program code is executed by a control unit or by a computer connected to the control unit.

### Brief description of the drawings

Fig. 1 illustrates a vehicle in which the proposed system and methods can be used.
Fig. 2 illustrates the vehicle seen from above.
Fig. 3 illustrates the power train of the vehicle in more detail.
Fig. 4A illustrates a system for distributing a braking torque of a vehicle according to some embodiments.
Fig. 4B illustrates a control unit according to one embodiment.
Fig. 5 illustrates a system for distributing a braking torque of a vehicle according to some other embodiments.
Fig. 6 illustrates a flow chart of a method according to some embodiments.

### Detailed description

In the following a system and a method for distributing a braking torque generated by one or several centrally acting auxiliary braking systems will be described. By decoupling at least one wheel of the vehicle from the braking torque, the braking torque is distributed to the other wheels of the vehicle. Thereby the vehicle may be steered or stabilized using the braking torque generated by the auxiliary braking system. This effect will in the following be exemplified with reference to a steering-by-braking system in a truck, but it should be understood that the system and method could also be used in other vehicles and applications such as in a yaw stability system.

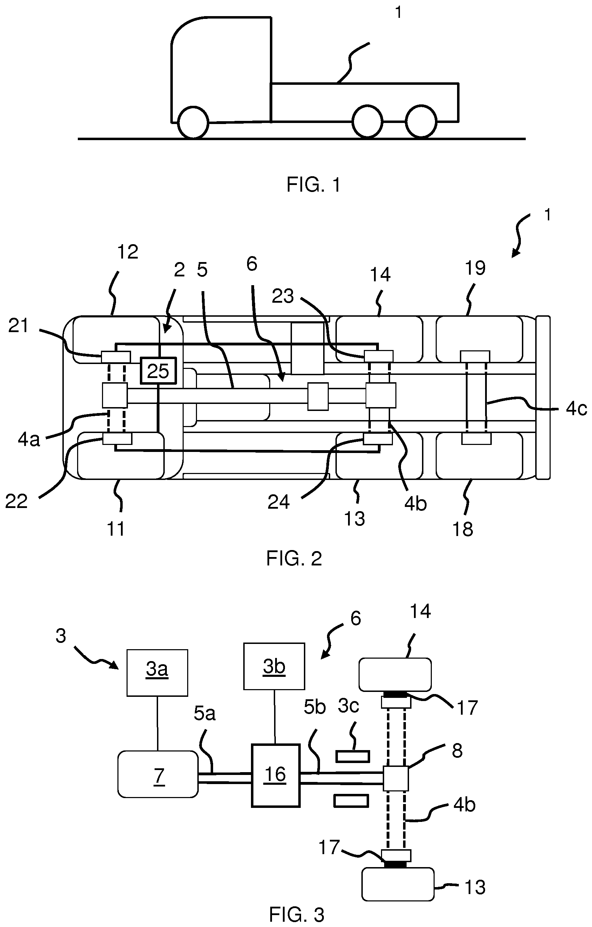

Fig. 1 schematically shows an example vehicle 1, here a truck, which may include the proposed solutions. Fig 2 is a schematic figure of the vehicle 1 in Fig. 1 seen from above, where the powertrain and the wheel axes of the vehicle 1 are exposed. The vehicle 1 thus includes a power train 6, two front wheels 11, 12 and four rear wheels 13, 14, 18, 19. The front wheels are arranged to a front wheel shaft 4a and the foremost rear wheels 13, 14 are arranged to a first rear wheel shaft 4b. The rearmost rear wheels 18, 19 are arranged to a second rear wheel shaft 4c. The power train 6 is here arranged to generate a driving torque and to convey the driving torque to the front wheel shaft and to the first rear wheel shaft 4b. The rearmost rear wheels 18, 19 are not driven by the power train 6. The vehicle 1 is thus arranged for four-wheel drive.

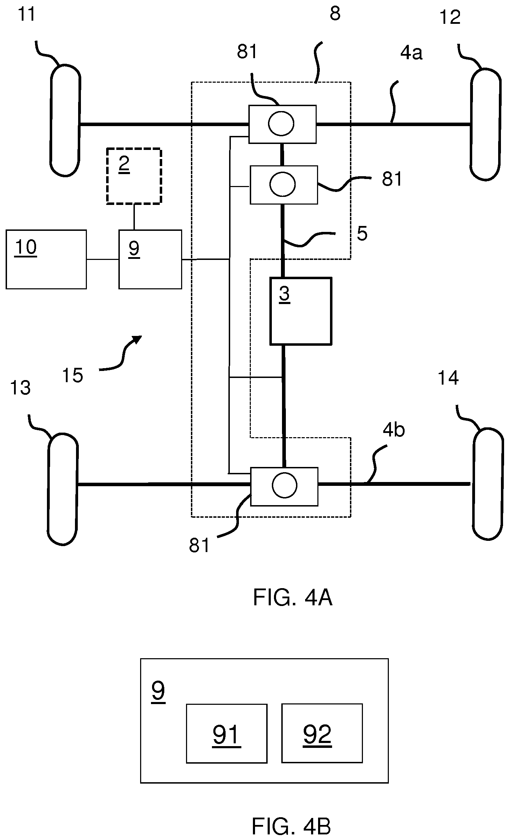

Fig 3. illustrates the powertrain 6 of the vehicle 1 in more detail. The power train 6 includes a prime mover 7, e.g. an electrical machine or a combustion engine configured to generate a driving torque. The driving torque is conveyed from the prime mover 7 via a first propulsion shaft 5a to a gearbox 16. The driving torque is then conveyed via a second propulsion shaft 5b leading from the gearbox 16 and via a coupling mechanism 8 (described in connection with Fig. 4), to the wheel shafts 4a, 4b of the vehicle's wheels 13, 14. The wheels 13, 14 are suspended to the wheel shafts 4a, 4b through a wheel suspension arrangement 17. For simplicity only the first rear wheel shaft 4b is shown in Fig 3, but it should be understood that the driving torque may be conveyed also to the wheels 11, 12 arranged to the front wheel shaft.

The power train 6 may typically also include other conventional devices such as a torque converter, clutch devices etc. that are not shown in the simplified drawing. Consequently, the first and second propulsion shafts 5a, 5b are typically not single shafts, but they may be composed by several parts. Thus, the general term propulsion shaft 5 used herein refers to any part of a central propulsion shaft of the power train 6, which conveys propelling (or braking in reverse operation) torque to wheels 11, 12, 13, 14 on both the left and the right side of the vehicle 1. The propulsion shaft 5 may thus be any or both of the first propulsion shaft 5a and the second propulsion shaft 5b.

The vehicle 1 also includes at least one service braking system 2, as schematically illustrated in Fig.2. The service braking system 2, also referred to as the wheel braking system, in a vehicle is the primary braking system and it is sometimes referred to as the main braking system. The service braking system 2 is typically operated by foot and is mechanically separated from the parking brake or emergency braking system. The service braking system 2 includes one control device 25, which in Fig. 2 is illustrated as one single control devices 25 for the front wheels 11, 12 and the rear wheels, 13, 14, but which alternatively may comprise two separate control devices for the front wheels 11, 12 and rear wheels 13, 14 respectively. The service braking system 3 also includes one or several service brake devices 21, 22, 22, 23, arranged at the wheels 11, 12, 13, 14 of the vehicle 1 that are arranged to be controlled by the control device 25 or the separate control devices . The service brake devices 21, 22, 23, 24 e.g. includes disc brakes and/or drum brakes. The service braking system 2 is typically hydraulic and relies on hydraulic pressure to activate the service braking system 2.

The vehicle 1 also includes at least one auxiliary braking system 3 as will be illustrated with reference to the Figs. 3-5. Heavy vehicles often use centralized auxiliary braking systems 3, i.e. braking systems that generate a braking torque acting on a propulsion shaft 5 of the drive line 6 of the vehicle 1. Hence, the auxiliary braking systems 3 of the vehicle 1 are arranged to generate a braking torque on a propulsion shaft 5 of the vehicle 1. The auxiliary braking systems 3 are further configured to be controlled by a control unit 9 e.g. though receiving control data, as will be further explained below. The auxiliary braking systems 3 may include different types of brakes. Examples of brakes suitable for use in centralized braking systems in heavy vehicles are retarders, exhaust brakes or electrical machines (acting as generator). Examples of auxiliary braking systems including the different types of brakes will now be illustrated referring to Fig.3.

In Fig. 3 a first auxiliary braking system using exhaust braking is schematically illustrated by a box 3a arranged in connection to the prime mover 7. As known to the skilled person, an exhaust brake is a means of slowing a diesel engine by closing off the exhaust path from the engine, causing the exhaust gases to be compressed in the exhaust manifold, and in the cylinder. Hence, the auxiliary braking system 3a using exhaust braking acts on the prime mover 7. Since the exhaust is being compressed, and there is no fuel being applied, the prime mover 7 works reversely, whereby a braking force is applied to the propulsion shaft 5a conveying the propulsion torque from the prime mover 7, thus the output shaft from the engine of the vehicle 1.

In Fig. 3 a second auxiliary braking system including a retarder, i.e. a hydrodynamic retarder, is schematically illustrated as another box 3b arranged in connection to the gearbox 16. Hydrodynamic retarders 3b are also often used in auxiliary braking systems in heavy vehicles. Hydraulic retarders use the viscous drag forces between dynamic and static vanes in a fluid-filled chamber to achieve retardation. A simple retarder uses vanes attached to a propulsion shaft 5 in the power train 6 e.g. at the output shaft of the gearbox 16. The second auxiliary braking system including a retarder 3b is thus arranged to apply a braking force on the output shaft of the gearbox 16.

Auxiliary braking systems may also be implemented by adding external braking mechanisms such as magnetic brakes 3c. Other examples of brakes suitable for use in auxiliary braking systems include an electrical machine acting as a generator in the power train 6 or a conventional motor brake. Common for all those auxiliary braking systems is that the generated braking torque acts centrally on a propulsion shaft 5 of the drive line.

Due to the abovementioned drawbacks associated with use of wheel brakes a driver of a heavy vehicle uses the at least one 'centralized' auxiliary braking system 3 to as large extent as possible. Centralized here refers to that the auxiliary braking system 3 is arranged to act on the propulsion shaft 5. However, for certain applications the braking force need to be individually adjusted per wheel. To achieve this a system 15 for distributing a braking torque of the vehicle 1 is introduced.

In Fig. 4A the proposed principle of distributing a braking torque generated by at least one auxiliary braking system 3 is illustrated with reference to a first example embodiment. Note that, the principle will now be described with reference to a vehicle having only one auxiliary braking system 3. However, it must be understood that the same principle may be applied to several auxiliary braking systems.

The general principle is that a negative torque i.e. a braking torque, on a propulsion shaft 5 of the power train 6 is conveyed to one or several individual wheels 11,12, 13, 14. Note that Fig. 4. is a conceptual drawing of the vehicle 1 in Fig. 1 seen from above. Fig. 4A only show the parts of the vehicle 1 that are needed to explain the concept.

The system 15 includes the coupling mechanism 8 and a control unit 9. The coupling mechanism 8, which is rather a "decoupling" mechanism, is a device arranged to couple and decouple at least one wheel 11, 12, 13, 14 of the vehicle 1 from the braking torque generated by the auxiliary braking system 3. The auxiliary braking system 3 includes as discussed above e.g. a retarder, an exhaustion brake, a motor brake and/or an electrical machine acting as a generator.

In the example embodiment of Fig. 4A the coupling mechanism 8 includes three differentials 81 for decoupling the braking torque from the propulsion shaft 5. A differential 81 is a gear train constructed to divide a driving torque on two or more shafts, which may rotate with different speeds. Differentials, or differential gears, are commonly known and used in motor vehicles. The differential allows each wheel to rotate at different speeds (such as when negotiating a turn), thus avoiding tire scuffing. A traditional differential conveys the power, in form of a propulsion torque, to the wheel (left or right) with least resistance. However, more advanced differential mechanisms e.g. manually controlled differentials and automated electronically controlled differentials, have been developed for use e.g. in four-wheel drive systems.

In Fig. 4A a first differential 81 is arranged to the front wheel shaft 4a and distributes the braking torque of an input shaft of the differential 81 between the left front wheel 11 and right front wheel 12. In the same way, a second differential 81 is arranged to the rear wheel shaft 4a and distributes a braking torque of an input shaft of the differential 81 between the left rear wheel 13 and right rear wheel 14. The differentials 81 arranged on the front wheel shaft 4a and the rear wheel shaft 4b may be configured to convey the entire braking torque to one of the wheels (left or right), or to one wheel pair if the wheel shaft 4a, 4b is arranged with two wheels on each side. Stated differently, the differentials 81 may be configured to decouple one wheel completely from the braking torque. Alternatively, the braking torque may be unevenly distributed between the wheels 11, 12, 13, 14 in other ways. For example, 80 percent of the total braking force is conveyed to the left wheel while 20 percent is conveyed to the right wheel.

The differential 81 arranged on a propulsion shaft 5 distributes the braking torque between the front wheel shaft 4a and the rear wheel shaft 4b. Hence, this differential is arranged to decouple two wheels i.e. the front wheels 11, 12 or the front wheels 13, 14 or all of the wheels.

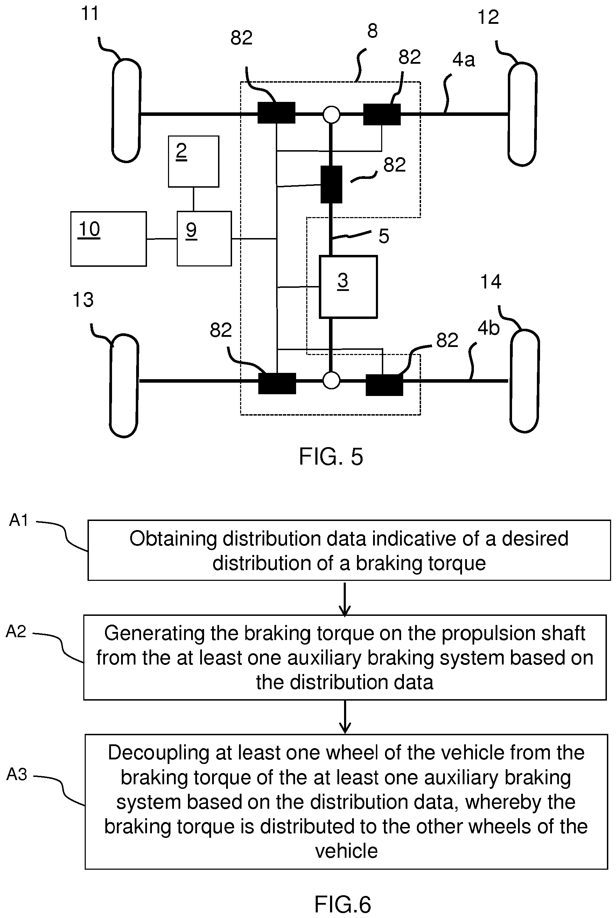

In the example embodiment of Fig. 4, the coupling mechanism 8 includes differentials 81 for coupling and decoupling the wheels 11, 12, 13, 14. However, other coupling devices suitable for decoupling a wheel from a wheel shaft may also be used, as will be shown in Fig. 5. Also note that, even though this example implementation includes three differentials 81, the same principle may be applied for controlling any number of differentials 81, or other coupling devices. The coupling mechanism 8 may e.g. include only one differential 81 arranged to act on the front wheel shaft 4a or only or one differential 81 arranged to act on the rear wheel shaft 4b. In another example embodiment the coupling mechanism 8 includes only one differential acting on the propulsion shaft 5 of the drive line, i.e. the centre shaft. This might be useful e.g. in articulated vehicles in order to avoid jack-knifing. Stated differently, the coupling mechanism 8 may act on the front wheel shaft 4a and/or a rear wheel shaft 4b of the vehicle. The coupling mechanism 8 may also act on a centre shaft of the vehicle, i.e. on the propulsion shaft 5.In other words, the coupling mechanism 8 can distribute a centrally generated braking torque unevenly between the wheels 11, 12, 13, 14. The coupling mechanism 8 may be arranged to decouple the at least one wheel completely or partly from the driving torque.

Furthermore, the coupling mechanism 8 is configured to be controlled by the control unit 9. The controlling e.g. implies that the coupling mechanism 8 receives control data or control parameters from the control unit 9 e.g. via one or more electrical lines or by a wireless connection. Hence, the coupling mechanism 8 is configured to receive control data or control parameters from the control unit 9. The coupling mechanism 8 is further configured to distribute the braking torque accordingly.

Communication of data and control signals etc. is typically performed via a Controller Area Network (CAN) buss. Further, any control unit mentioned herein is typically an Electronic Control Unit, ECU, or implemented in an existing ECU, that is configured to communicate with other ECUs, devices, sensors etc. via the CAN bus.

The control unit 9, e.g. an ECU, is a unit configured to determine or calculate a braking torque needed per wheel and to control the auxiliary braking system 3 and the coupling mechanism 9 accordingly. This functionality may be used in different applications such as steering or vehicle stabilization, as discussed above. The control unit 9 may be arranged at, or in connection with, the coupling mechanism 8 or it may be a separate part. In fact it may be several separate parts. It may also be integrated with other functionality. The control unit 9 may also be a part of an electrical system of the vehicle. Hence, it may be connected to and arranged to exchange data with other control systems in the vehicle. The control unit 9 may include control circuitry, such as a memory 91 and a processor 92, see Fig. 4B. The memory 91 may be made up of one or several memory units. The processor 92 may be made up of one or several CPUs, Central Processing Units. In other words, the control unit 9 described herein should rather be regarded a functional component, that may be embodied in several different ways.

The control unit 9 is configured to control the at least one auxiliary braking system 3 to generate the braking torque on the propulsion shaft 5. The control unit 9 may e.g. activate the auxiliary braking system 3 or control the amount of a braking force generated by the auxiliary braking system 3. The control unit 9 is also configured to control the coupling mechanism 8. In order to control the coupling mechanism 8 the control unit 9 takes different input parameters, herein referred to as distribution data, as input. The distribution data may depending on the application include different types of data such as a steering direction, a steering angle, a vehicle speed, data from the service braking system 2, data from the auxiliary braking system 3, data indicating a position of the vehicle 1, an altitude parameter, map data or data indicating a desired stability of the vehicle 1. The distribution data may also be taken as input when controlling the auxiliary braking system 3. Stated differently, the control unit 9 is configured to obtain distribution data indicative of a desired distribution of the braking torque between the wheels of the vehicle 1 and to control the coupling mechanism 8 to decouple at least one wheel 11, 12, 13, 14 of the vehicle 1 from the braking torque, based on the distribution data.

The control functionality may be implemented in different ways. For example, the control unit 9 is configured to transmit control data or control parameters to the coupling mechanism 8 and to the auxiliary braking system 3. The control data sent to the coupling mechanism 8 indicates how the braking torque shall be distributed between the wheels 11, 12, 13, 14. It may also indicate a time period Δt for the distribution. When the coupling mechanism 8 receives the control data or control parameters distributes the braking force accordingly during the indicated time period Δt (if such data is included). Alternatively, the torque may be distributed as indicated by the control data until the control unit 9 indicates another distribution. Similarly, the control data sent to the auxiliary braking system 3 may indicate the time period Δt and amount of a braking torque.

According to some embodiments, the control unit 9 is arranged to determine the control data based on at least one predetermined rule for the distribution data. The control unit 9 is then configured to control the at least one braking system 3 and the coupling mechanism 8 in accordance with the control data. A predetermined rule is e.g. a formula, a table or a mathematical model. One example is a table, which maps distribution data, such as steering angle, to certain control data, such as distribution of braking force and time period Δt for the distribution. The distribution is e.g. indicated by one weight *w₁, w₂, w₃, w₄* per wheel 11, 12, 13, 14, wherein each weight indicates a portion of the total torque to be distributed to the respective wheel, wherein the sum of the weights *w₁, w₂, w₃ ,w₄* is 1.

As discussed above one, the system 15 may be used for implementing steering by braking functionality. Hence, according to some embodiments, the control unit 9 is arranged to obtain distribution data indicating a steering direction of the vehicle 1. For example, the distribution data includes a steering parameter generated by a steering system 10 of the vehicle 1. The steering system 10 may include a manual steering mechanism (e.g. a steering wheel), an autonomous steering mechanism (e.g. LKA, Lane Keeping Assistance) or a combination thereof. The steering system may include separate parts for automatic and manual steering. The steering system 10 may be integrated with the control unit 9. As discussed above the vehicle 1 may be steered by distributing a braking force unevenly between the left and right sides of the vehicle 1. The left and right sides of the vehicle 1 are defined with reference to a centre line C of the vehicle 1 in a driving direction, see Fig. 2. The general principle is that an alternative to turning the wheels 11, 12, 13, 14, which is the most common way of steering a vehicle 1, the vehicle 1 can be turned by braking the wheels 11, 12, 13, 14 on one side of the vehicle more than the other. For achieving this while utilising the centralised torque generated by the auxiliary braking system 3, the control unit 9 is configured to determine control data in order to control the coupling mechanism 8 to distribute the braking torque such that the vehicle 1 is steered in accordance with the steering direction.

Mathematical models are often used for controlling complex dynamic systems such as vehicles. Hence, steering of a vehicle is also a complex operation, where different parameters need to be considered in order to calculate how to apply a steering force, e.g. in terms of a braking force on one or more wheels. In one example embodiment the control unit 9 includes a mathematical model to calculate control data to the coupling mechanism 8. Such a model may take as input parameters such as vehicle weight, speed and state of the road. Hence, according to some embodiments, the control unit 9 includes a model of the vehicle 1, and is further configured determine the control data based on the model.

In one example scenario the steering wheel is turned by the driver. The turning of the steering wheel will result in that a steering parameter is generated e.g. by the steering system 10. The steering parameter e.g. indicates a steering angle. The control unit 9 then takes the steering parameter as an input to determine corresponding control data. The control data indicates an amount of braking force, a distribution of the braking force between the wheels 11, 12, 13, 14 of the vehicle 1 and a time period Δt for applying the braking force. The control unit 9 may then control the auxiliary braking system 3 to generate the desired braking torque and the coupling mechanism 8 to distribute it, during a desired time Δt, such that the vehicle 1 turns according to the desired steering angle. The control data may then also be determined based on the velocity of the vehicle.

In another example scenario the steering direction or steering angle is automatically generated e.g. LKA, Lane Keeping Assistance system. In road-transport terminology, a Lane Keeping Assistance is a mechanism designed to automatically steer a vehicle to stay within its lane. LKA typically uses one or more sensor, e.g. cameras, in order to provide real-time feedback to the steering system 10. Hence, the above mentioned distribution data may be include such sensor data or a steering angle generated from such sensor data. The control unit 9 then takes the sensor data or the steering angle or as an input to determine the corresponding control data. The control data indicates e.g. an amount of braking force, a distribution of the braking force between the wheels 11, 12, 13, 14 of the vehicle 1 and a time period Δt for applying the braking force. As above, the control unit 9 may then control the auxiliary braking system 3 to generate the desired braking torque and the coupling mechanism 8 to distribute it during a desired time period Δt such that the vehicle 1 turns according to the desired steering angle. The control data may then also be determined based on the velocity of the vehicle 1.

According to some embodiments, the control unit 9 is arranged to determine control data in order to control the coupling mechanism 8 to decouple at least one wheel 11, 12, 13, 14 of the vehicle 1 arranged on an outside of the vehicle 1 in order to steer the vehicle 1 in the turning direction. An outside of the vehicle is herein defined with reference to the indicated steering direction D of the vehicle 1, from the braking force. For example, if the indicated steering direction is "right", then at least one of wheels 11, 13 on the left side of the vehicle 1 is decoupled from the braking torque. Thereby, steering by braking could be achieved while utilizing a braking torque generated by a central auxiliary braking system 3. Maximum turning torque is typically generated when all wheels 11, 12, 13, 14 on the outer side are decoupled from the braking force. Hence, according to some embodiments, the control unit 9 is arranged to determine control data in order to control the coupling mechanism 8 to decouple all wheels 11, 12, 13, 14 of the vehicle 1 arranged on the outside of the vehicle 1 in order to steer the vehicle 1 in the turning direction. For example the braking torque is evenly distributed between the front wheel 12 and the foremost rear wheel 14 on the right side of the vehicle 1, when the indicated steering direction indicates a turn to the right.

By knowing the upcoming trajectory or path of the vehicle 1, the control unit 1 may based on map data and the position of the vehicle 1 get information on upcoming turns of the road and determine control data accordingly to make the vehicle 1 turn when needed. Further, the control unit 5 is in some embodiments configured to also use the altitude difference of the road, e.g. an altitude parameter, to determine control data in order to steer the vehicle 1 also based on the altitude difference. The altitude parameter may thus indicate a slope angle of the road. For example, in downhill, it is advantageous to use the present system for steering as the wheel or wheels that are then decoupled during steering will still be conducted forward because of the weight of the vehicle 1 and the slope of the downhill. In uphill, the present system should only be used in short time periods at a time to not loose speed. The trajectory of the vehicle 1, map data, the position of the vehicle 1, the altitude parameter etc. are data that can be retrieved from already existing units in the vehicle 1, e.g. a cruise control unit (not shown) and/or a path planning unit (not shown).

In some situations, the service braking system 2 and the auxiliary braking system 3 may both be used in order to steer the vehicle 1. Accordingly, the control unit 9 is then also arranged to control the service braking system 2. For example the braking force used to steer the vehicle 1 may be interchangeably provided by the different braking systems 2, 3. Alternatively, the systems 2, 3 may be used simultaneously. Hence, according to some embodiments, the control unit 9 is configured to determine control data indicating a combined distribution of a braking force from the service braking system 2 and the braking force from the at least one auxiliary braking system 3 in order to steer the vehicle 1 in the steering direction. Then the control unit 9 is configured to control the service braking system 2, the at least one auxiliary braking system 3 and/or the coupling mechanism 8 in accordance with the determined combined distribution. The interchange between the different braking systems 2, 3 is in some embodiments determined based on how hot the drum brakes are, or any of the distribution parameters.

The control unit 9, or at least the function to control the coupling mechanism 8, may switched on and off. When the controlling is switched off, the coupling mechanism 8 may use a default predetermined distribution, e.g. the torque is evenly distributed between the wheels 11, 12, 13, 14.

The control unit 9 may generate and provide new control data to the coupling mechanism 8 continuously, or with certain pre-defined time interval. In the latter case, the braking torque is then distributed in an indicated way until a new distribution is provided to the coupling mechanism 8. Alternatively, control data may be provided at indefinite points in time and the braking force is then distributed during a certain time period Δt after the provision. Stated differently, according to some embodiments, the control unit 9 is configured to determine control data indicating a time period Δt during which the braking force from the at least one auxiliary braking system 3 is distributed, based on the distribution data. The control unit 9 is then further configured to distribute the braking force during the time period Δt. The time period Δt is e.g. pre-defined or it is dynamically determined and provided by the control unit 9.

The proposed system 15 is in some embodiments similar to a system used for 4-wheel drive, or AWD, All-Wheel Drive. However, a major difference is that the system 15 is also arranged to control a reverse torque, i.e. the braking torque. However, from an implementation perspective it may be advantageous to provide one 4-wheel drive or AWD system that can cater for distribution of both propulsion and braking torque on per-wheel basis. In other words, according to some embodiments, the system 15 is also arranged to distribute propulsion torque generated by an engine 7 of the vehicle 1.

Fig. 5 illustrates a system for distributing a braking torque of a vehicle according to some alternative embodiments. The system 15 of Fig. 5 differs from the system 15 of Fig. 4A in that the coupling mechanism 8 includes couplings 82 instead of differentials 81 for decoupling the wheels 11, 12, 13, 14 from the braking torque. A coupling 82 is a device used to connect two shafts together at their ends for conveying power e.g. a torque. Examples of couplings 82 are gear couplings and muff couplings. In Fig. 5 the coupling mechanism 8 includes one coupling 82 arranged to connect and disconnect each wheel 11,12, 13, 14, respectively. A respective coupling 82 is arranged to act on the wheel shaft 4a, 4b between a respective wheel 11, 12, 13, 14 and the propulsion shaft 5, thus two couplings 82 are arranged to act on each wheel shaft 4a, 4b. The coupling mechanism 8 further includes another coupling 82 arranged at the propulsion shaft 5. Hence, in the same way as described above, the control unit 9 is arranged to couple and decouple the wheels 11, 12, 13, 14 from a centrally generated braking torque.

The invention also relates to a corresponding method for distributing braking torque in the vehicle 1. The method will now be explained with reference to the flow chart illustrated in Fig. 6, and to the illustrations in the other figures. The method is for use in the vehicle 1, for example in an electrical control system. According to some embodiments, the method is implemented as a computer program P. The computer program P includes computer program code configured to cause a control unit 9, or a computer connected to the control unit 9, to perform any of the method steps described herein. According to a further aspect, the invention relates to a computer program product comprising computer program code stored on a non-transitory computer-readable medium to perform the method steps to perform any of the method steps described herein, when the computer program code is executed by a control unit 9 or by a computer connected to the control unit 9.

The method steps that will now be described may be performed continuously or with a certain periodicity. For example, the method is performed when a steering system 10 of the vehicle 1 provides distribution data indicative of a desired distribution of the braking torque between the wheels 11, 12, 13, 14 of the vehicle 1. This may occur when the steering wheel is manually turned by a driver.

The method includes obtaining S1 distribution data indicative of a desired distribution of the braking torque between the wheels 11, 12, 13, 14 of the vehicle 1. In other words, the control system retrieves data that indicates a desired state such as a steering direction or a position of the vehicle's body parts. As explained above, such distribution data may be obtained from different entities of the vehicle 1 such as from a steering system 10, etc. According to some embodiments the method includes determining control data based on at least one predetermined rule for the distribution data, and generating the braking torque on the propulsion shaft 5 and decoupling the at least one wheel 11, 12, 13, 14 of the vehicle 1 from the braking force in accordance with the control data.

The method further includes generating S2 the braking torque on the propulsion shaft 5 from the at least one auxiliary braking system 3 based on the distribution data. This step implies that the auxiliary braking system 3 is controlled to generate a braking force. For example, control data indicating time and amount of a braking torque is sent to the auxiliary braking system 3.

Finally, the method includes decoupling S3 at least one wheel 11, 12, 13, 14 of the vehicle 1 from the braking torque of the at least one auxiliary braking system 3 based on the distribution data, whereby the braking torque is distributed to the other wheels 11, 12, 13, 14 of the vehicle 1. For example, the determined control data is sent to a coupling mechanism 8, which acts accordingly. In other words, a centrally generated braking torque is unevenly divided between the wheels 11, 12, 13, 14, as explained in connection with the system.

The control data may also indicate a time period Δt during which the braking force from the at least one auxiliary braking system 3 is distributed. Then the decoupling S3 includes decoupling S3 at least one wheel 11, 12, 13, 14 of the vehicle 1 from the braking torque of the at least one auxiliary braking system 3 during the time period Δt.

The control data is for example determined based on a model of the vehicle 1, as discussed above. The control data may be determined based on different parameters related to the position of the vehicle 1 that are available in the vehicle 1. Examples of such parameters are a steering direction, a steering angle, a vehicle speed, data from the service braking system 2, data from the auxiliary braking system 3, data indicating a position of the vehicle 1, an altitude parameter, map data or data indicating a desired stability of the vehicle 1.

In some example embodiments, the obtained distribution data indicates a steering direction of the vehicle 1. Thus, the control data is determined to indicate a distribution of the braking torque corresponding to the steering direction and the decoupling includes distributing the braking torque in accordance with the control data.

In further example embodiments, the control data is determined for decoupling at least one wheel 11, 12, 13, 14 of the vehicle 1 arranged on an outside of the vehicle 1. In this way, the vehicle 1 is steered in the steering direction. In other words, the control data is determined to indicate that at least one wheel 11, 12, 13, 14 arranged on an outside of the vehicle 1 shall be decoupled. As above, the outside of the vehicle 1 is defined with reference to the indicated steering direction of the vehicle 1 from the braking force.

Alternatively, the control data is determined for decoupling all wheels 11, 12, 13, 14 of the vehicle 1 arranged on an outside of the vehicle 1. In this way, a larger steering force is provided than when decoupling only one wheel 11, 12, 13, 14. In other words, the control data is determined to indicate that all wheels 11, 12, 13, 14 on one side of the vehicle 1 shall be decoupled. As understood it is only wheels among the wheels 11, 12, 13, 14 that are arranged to be decoupled by the coupling mechanism 8 that are decoupled.

In further example embodiments, the method includes determining control data indicating a combined distribution of a braking force from the service braking system 2 and the braking force from the at least one auxiliary braking system 3. The method then includes controlling the service braking system 2, the at least one auxiliary braking system 3 and/or the coupling mechanism 8 in accordance with the determined combined distribution.

The present disclosure is not limited to the above-described preferred embodiments. Various alternative or modifications may be used without departing from scope of the invention as defined by the appended claims.

Therefore, the above embodiments should not be taken as limiting the scope of the invention which is defined by the appended claims.

## Claims

1. A system (15) for distributing a braking torque of a vehicle (1) arranged with a service braking system (2), and at least one auxiliary braking system (3) arranged to generate a braking torque on a propulsion shaft (5) of the vehicle (1), the system (15) includes:
- a coupling mechanism (8) arranged to couple and decouple at least one wheel (11, 12, 13, 14) of the vehicle (1) from the braking torque;
- a control unit (9) configured to:
- obtain distribution data indicative of a desired distribution of the braking torque between the wheels (11, 12, 13, 14) of the vehicle (1);
- control the at least one auxiliary braking system (3) to generate the braking torque on the propulsion shaft (5) based on the distribution data; and
- control the coupling mechanism (8) to decouple at least one wheel (11, 12, 13, 14) of the vehicle (1) from the braking torque of the at least one auxiliary braking system, based on the distribution data, in order to distribute the braking torque to the other wheels (11, 12, 13, 14) of the vehicle (1),
**characterized in that** the at least one auxiliary braking system (3) is an exhaust brake or a retarder and that the control unit (9) is arranged to:
- determine control data based on at least one predetermined rule for the distribution data, and to control the at least one auxiliary braking system (3) and the coupling mechanism (8) in accordance with the control data;
- obtain the distribution data indicating a steering direction of the vehicle (1) wherein the control unit (9) is configured to determine control data in order to control the coupling mechanism (8) to distribute the braking torque such that the vehicle (1) is steered in accordance with the steering direction and;
- determine control data in order to control the coupling mechanism (8) to decouple at least one wheel (11, 12, 13, 14) of the vehicle (1) arranged on an outside of the vehicle (1) with reference to the indicated steering direction of the vehicle (1), from the braking force, in order to steer the vehicle (1) in the steering direction.

2. The system (15) according to claim 1, wherein the control unit (9) is arranged to determine control data in order to control the coupling mechanism (8) to decouple all wheels (11, 12, 13, 14) of the vehicle (1) arranged on the outside of the vehicle (1) with reference to the indicated steering direction of the vehicle (1), from the braking force, in order to steer the vehicle (1) in the steering direction.

3. The system (15) according to any of the claims 1 to 2, wherein the control unit (9) is configured to determine control data indicating a combined distribution of a braking force from the service braking system (2) and the braking force from the at least one auxiliary braking system (3) in order to steer the vehicle (1) in the steering direction, wherein the control unit (9) is configured to control the service braking system (2), the at least one auxiliary braking system (3) and/or the coupling mechanism (8) in accordance with the determined combined distribution.

4. The system (15) according to any of the claims 1 to 3, wherein the control unit (9) is configured to determine control data indicating a time period Δt during which the braking force from the at least one auxiliary braking system (3) is distributed, based on the distribution data, and wherein the control unit (9) further is configured to control the at least one auxiliary braking system (3) to distribute the braking force during the time period Δt.

5. The system (15) according to any of the any of the claims 1 to 4, wherein the control unit (9) includes a model of the vehicle (1), and is further configured to determine the control data based on the model.

6. The system (15) according to any of the any of the previous claims, wherein the coupling mechanism (8) includes at least one differential (81) and/or a coupling (82).

7. The system (15) according to any of the any of previous claims, wherein the distribution data includes at least one of: a steering direction, a steering angle, a vehicle speed, data from the service braking system (2), data from the auxiliary braking system (3), data indicating a position of the vehicle (1), an altitude parameter, map data or data indicating a desired stability of the vehicle (1).

8. A vehicle (1) including:
- a wheel suspension arrangement (17) for suspending a plurality of wheels (11, 12, 13, 14);
- a propulsion shaft (5),
- a service braking system (2),
- at least one auxiliary braking system (3) arranged to generate a braking torque acting on the propulsion shaft (5) and a system (15) according to any of claims 1 to 7.

9. A method for distributing a braking torque of a vehicle (1) arranged with a service braking system (2), and at least one auxiliary braking system (3) arranged to generate a braking torque acting on a propulsion shaft (5) of the vehicle (1) wherein the at least one auxiliary braking system (3) is an exhaust brake or a retarder, the method including:
- obtaining (S1) distribution data indicative of a desired distribution of the braking torque between the wheels (11, 12, 13, 14) of the vehicle (1);
- generating (S2) the braking torque on the propulsion shaft (5) from the at least one auxiliary braking system (3) based on the distribution data, and
- decoupling (S3) at least one wheel (11, 12, 13, 14) of the vehicle (1) from the braking torque of the at least one auxiliary braking system (3) based on the distribution data, whereby the braking torque is distributed to the other wheels (11, 12, 13, 14) of the vehicle (1);
- determining control data based on at least one predetermined rule for the distribution data, and generating the braking torque on the propulsion shaft (5) and decoupling the at least one wheel (11, 12, 13, 14) of the vehicle (1) from the braking force in accordance with the control data and
wherein the distribution data indicates a steering direction of the vehicle (1), and wherein the method includes determining control data indicating a distribution of the braking torque corresponding to the steering direction, and wherein the decoupling includes distributing the braking torque in accordance with the control data by decoupling at least one wheel of the vehicle, arranged on an outside of the vehicle with reference to the indicated steering direction of the vehicle, from the braking force, in order to steer the vehicle in the steering direction.

10. The method according to any of the claim 9, including determining control data for decoupling all wheels (11, 12, 13, 14) of the vehicle (1) arranged on the outside of the vehicle (1) with reference to the indicated steering direction of the vehicle (1), from the braking force.

11. The method according to any of the claims 9 to 10, including determining control data indicating a combined distribution of a braking force from the service braking system (2) and the braking force from the at least one auxiliary braking system (3), and controlling the service braking system (2), the at least one auxiliary braking system (3) and/or the coupling mechanism (8) in accordance with the determined combined distribution.

12. The method according to any of the claims 9 to 11, including determining control data indicating a time period Δt during which the braking force from the at least one auxiliary braking system (3) is distributed, based on the distribution data, and distributing the braking force during the time period Δt.

13. The method according to claim 12, including determining the control data based on a model of the vehicle (1).

14. The method according to any of the claims 9 to 13, including determining control data based on at least one of: a steering direction, a steering angle, a vehicle speed, data from the service braking system (2), data from the auxiliary braking system (3), data indicating a position of the vehicle (1), an altitude parameter, map data or data indicating a desired stability of the vehicle (1).

15. A computer program P, wherein the computer program P includes a computer program code to cause a control unit (9), or a computer connected to the control unit (9), to perform the method steps according to any of claims 9 to 14.

16. A computer program product comprising a computer program code stored on a non-transitory computer-readable medium to perform the method steps according to any of the claims 9 to 14, when the computer program code is executed by a control unit (9) or by a computer connected to the control unit (9).

## Patentansprüche

1. System (15) zur Verteilung eines Bremsmoments eines Fahrzeugs (1), das mit einem Betriebsbremssystem (2) und wenigstens einem Zusatzbremssystem (3) ausgerüstet ist, welches dazu angeordnet ist, ein Bremsmoment auf eine Antriebswelle (5) des Fahrzeugs (1) zu erzeugen, wobei das System (15) umfasst:
- eine Kupplungseinrichtung (8), die dazu angeordnet ist, wenigstens ein Rad (11, 12, 13, 14) des Fahrzeugs (1) mit dem Bremsmoment zu koppeln und von ihm zu entkoppeln,
- eine Steuereinheit (9), die eingerichtet ist zum:
- Gewinnen von Verteilungsdaten, die eine gewünschte Verteilung des Bremsmoments zwischen den Rädern (11, 12, 13, 14) des Fahrzeugs (1) angeben,
- Steuern des wenigstens einen Zusatzbremssystems (3) zum Erzeugen des Bremsmoments auf die Antriebswelle (5) basierend auf den Verteilungsdaten, und
- Steuern der Kupplungseinrichtung (8) zum Entkoppeln wenigstens eines Rades (11, 12, 13, 14) des Fahrzeugs (1) von dem Bremsmoment des wenigstens einen Zusatzbremssystems basierend auf den Verteilungsdaten, um das Bremsmoment auf die anderen Räder (11, 12, 13, 14) des Fahrzeugs (1) zu verteilen, **dadurch gekennzeichnet, dass** das wenigstens eine Zusatzbremssystem (3) eine Motorbremse oder ein Retarder ist und dass die Steuereinheit (9) eingerichtet ist zum:
- Festlegen von Steuerdaten basierend auf wenigstens einer vorgegebenen Regel für die Verteilungsdaten, und Steuern des wenigstens einen Zusatzbremssystems (3) und der Kupplungseinrichtung (8) in Übereinstimmung mit den Steuerdaten,
- Gewinnen der Verteilungsdaten, die eine Lenkrichtung des Fahrzeugs (1) angeben, wobei die Steuereinheit (9) dazu eingerichtet ist, Steuerdaten festzulegen, um die Kupplungseinrichtung (8) zum Verteilen des Bremsmoments solchermaßen zu steuern, dass das Fahrzeug (1) in Übereinstimmung mit der Lenkrichtung gelenkt wird, und
- Festlegen von Steuerdaten, um die Kupplungseinrichtung (8) zum Entkoppeln wenigstens eines Rades (11, 12, 13, 14) des Fahrzeugs (1), das sich hinsichtlich der angegebenen Lenkrichtung des Fahrzeugs (1) auf einer Außenseite des Fahrzeugs (1) befindet, von dem Bremsmoment zu steuern, um das Fahrzeug (1) in die Lenkrichtung zu lenken.

2. System (15) nach Anspruch 1, bei dem die Steuereinheit (9) dazu angeordnet ist, Steuerdaten festzulegen, um die Kupplungseinrichtung (8) zum Entkoppeln aller Räder (11, 12, 13, 14) des Fahrzeugs (1), die sich hinsichtlich der angegebenen Lenkrichtung des Fahrzeugs (1) auf der Außenseite des Fahrzeugs (1) befinden, von dem Bremsmoment zu steuern, um das Fahrzeug (1) in die Lenkrichtung zu lenken.

3. System (15) nach einem der Ansprüche 1 bis 2, bei dem die Steuereinheit (9) dazu eingerichtet ist, Steuerdaten festzulegen, welche eine kombinierte Verteilung einer Bremskraft aus dem Betriebsbremssystem (2) und der Bremskraft aus dem wenigstens einen Zusatzbremssystem (3) angeben, um das Fahrzeug (1) in die Lenkrichtung zu lenken, wobei die Steuereinheit (9) dazu eingerichtet ist, das Betriebsbremssystem (2), das wenigstens eine Zusatzbremssystem (3) und/oder die Kupplungseinrichtung (8) in Übereinstimmung mit der festgelegten kombinierten Verteilung zu steuern.

4. System (15) nach einem der Ansprüche 1 bis 3, bei dem die Steuereinheit (9) dazu eingerichtet ist, Steuerdaten festzulegen, welche eine Zeitdauer Δt angeben, während derer die Bremskraft aus dem wenigstens einen Zusatzbremssystem (3) basierend auf den Verteilungsdaten verteilt wird, und bei dem die Steuereinheit (9) ferner dazu eingerichtet ist, das wenigstens eine Zusatzbremssystem (3) zum Verteilen der Bremskraft während der Zeitdauer Δt zu steuern.

5. System (15) nach einem der Ansprüche 1 bis 4, bei dem die Steuereinheit (9) ein Modell des Fahrzeugs (1) enthält und ferner dazu eingerichtet ist, die Steuerdaten basierend auf dem Modell zu bestimmen.

6. System (15) nach einem der vorhergehenden Ansprüche, bei dem die Kupplungseinrichtung (8) zumindest ein Differential (81) und/oder eine Kupplung (82) umfasst.

7. System (15) nach einem der vorhergehenden Ansprüche, bei dem die Verteilungsdaten zumindest eines umfassen aus: einer Lenkrichtung, einem Lenkwinkel, einer Fahrzeuggeschwindigkeit, Daten von dem Betriebsbremssystem (2), Daten von dem Zusatzbremssystem (3), Daten, die eine Position des Fahrzeugs (1) angeben, einem Höhenparameter, Kartendaten oder Daten, die eine gewünschte Stabilität des Fahrzeugs (1) angeben.

8. Fahrzeug (1), mit:
- einer Radaufhängungsanordnung (17) zur Aufhängung mehrerer Räder (11, 12, 13, 14),
- einer Antriebswelle (5),
- einem Betriebsbremssystem (2),
- wenigstens einem zum Erzeugen eines auf die Antriebswelle (5) wirkenden Bremsmoments angeordneten Zusatzbremssystem (3) und einem System (15) nach einem der Ansprüche 1 bis 7.

9. Verfahren zur Verteilung eines Bremsmoments eines Fahrzeugs (1), das mit einem Betriebsbremssystem (2) und wenigstens einem Zusatzbremssystem (3) ausgerüstet ist, welches dazu angeordnet ist, ein auf eine Antriebswelle (5) des Fahrzeugs (1) wirkendes Bremsmoment zu erzeugen, wobei das wenigstens eine Zusatzbremssystem (2) eine Motorbremse oder ein Retarder ist, wobei das Verfahren umfasst:
- Gewinnen (S1) von Verteilungsdaten, die eine gewünschte Verteilung des Bremsmoments zwischen den Rädern (11, 12, 13, 14) des Fahrzeugs (1) angeben,
- Erzeugen (S2) des Bremsmoments auf die Antriebswelle (5) aus dem wenigstens einen Zusatzbremssystem (3) basierend auf den Verteilungsdaten, und
- Entkoppeln (S3) zumindest eines Rades (11, 12, 13, 14) des Fahrzeugs (1) von dem Bremsmoment des wenigstens einen Zusatzbremssystems (3) basierend auf den Verteilungsdaten, wodurch das Bremsmoment auf die anderen Räder (11, 12, 13, 14) des Fahrzeugs (1) verteilt wird,
- Festlegen von Steuerdaten basierend auf wenigstens einer vorbestimmten Regel für die Verteilungsdaten und Erzeugen des Bremsmoments auf die Antriebswelle (5) und Entkoppeln des zumindest einen Rades (11, 12, 13, 14) des Fahrzeugs (1) von dem Bremsmoment in Übereinstimmung mit den Steuerdaten, wobei die Verteilungsdaten eine Lenkrichtung des Fahrzeugs (1) angeben, und wobei das Verfahren umfasst ein Bestimmen von Steuerdaten, die eine der Lenkrichtung entsprechende Verteilung des Bremsmoments angeben, und wobei das Entkoppeln ein Verteilen des Bremsmoments in Übereinstimmung mit den Steuerdaten umfasst durch Entkoppeln mindestens eines Rades des Fahrzeugs, das sich hinsichtlich der angegebenen Lenkrichtung des Fahrzeugs auf einer Außenseite des Fahrzeugs befindet, von dem Bremsmoment, um das Fahrzeug in die Lenkrichtung zu steuern.

10. Verfahren nach Anspruch 9, umfassend ein Ermitteln von Steuerdaten zum Entkoppeln aller Räder (11, 12, 13, 14) des Fahrzeugs (1), die sich hinsichtlich der angegebenen Lenkrichtung des Fahrzeugs (1) auf der Außenseite des Fahrzeugs (1) befinden, von der Bremskraft.

11. Verfahren nach einem der Ansprüche 9 bis 10, umfassend ein Festlegen von Steuerdaten, die eine kombinierte Verteilung einer Bremskraft aus dem Betriebsbremssystem (2) und der Bremskraft aus dem wenigstens einen Zusatzbremssystem (3) angeben, und Steuern des Betriebsbremssystems (2), des wenigstens einen Zusatzbremssystems (3) und/oder der Kupplungseinrichtung (8) in Übereinstimmung mit der festgelegten kombinierten Verteilung.

12. Verfahren nach einem der Ansprüche 9 bis 11, umfassend ein Festlegen von Steuerdaten, die eine Zeitdauer Δt angeben, während derer die Bremskraft aus dem wenigstens einen Zusatzbremssystem (3) basierend auf den Verteilungsdaten verteilt wird, und Verteilen der Bremskraft während der Zeitdauer Δt.

13. Verfahren nach Anspruch 12, umfassend ein Bestimmen der Steuerdaten basierend auf einem Modell des Fahrzeugs (1).

14. Verfahren nach einem der Ansprüche 9 bis 13, umfassend ein Festlegen von Steuerdaten basierend auf zumindest einem aus: einer Lenkrichtung, einem Lenkwinkel, einer Fahrzeuggeschwindigkeit, Daten von dem Betriebsbremssystem (2), Daten von dem Zusatzbremssystem (3), Daten, die eine Position des Fahrzeugs (1) angeben, einem Höhenparameter, Kartendaten oder Daten, die eine gewünschte Stabilität des Fahrzeugs (1) angeben.

15. Computerprogramm (P), wobei das Computerprogramm (P) einen Computerprogrammcode enthält, um eine Steuereinheit (9) oder einen mit der Steuereinheit (9) verbundenen Computer dazu zu veranlassen, die Verfahrensschritte nach einem der Ansprüche 9 bis 14 auszuführen.

16. Computerprogrammprodukt mit einem Computerprogrammcode, der auf einem nichtflüchtigen computerlesbaren Medium gespeichert ist, zum Durchführen der Verfahrensschritte nach einem der Ansprüche 9 bis 14, wenn der Computerprogrammcode von einer Steuereinheit (9) oder von einem mit der Steuereinheit (9) verbundenen Computer ausgeführt wird.

## Revendications

1. Système (15) pour la distribution d'un couple de freinage d'un véhicule (1) agencé avec un système de freinage de service (2), et au moins un système de freinage auxiliaire (3) agencé pour générer un couple de freinage sur un arbre de propulsion (5) du véhicule (1), le système (15) comprend :
- un mécanisme de couplage (8) agencé pour coupler et découpler au moins une roue (11, 12, 13, 14) du véhicule (1) à partir du couple de freinage ;
- une unité de commande (9) configurée pour :
- obtenir des données de distribution indicatives d'une distribution souhaitée du couple de freinage entre les roues (11, 12, 13, 14) du véhicule (1) ;
- commande de l'au moins un système de freinage auxiliaire (3) pour
générer le couple de freinage sur l'arbre de propulsion (5) sur base des données de distribution ; et
- commander le mécanisme de couplage (8) pour découpler au moins une roue (11, 12, 13, 14) du véhicule (1) à partir du couple de freinage de l'au moins un système de freinage auxiliaire, sur base des données de distribution, afin de distribuer le couple de freinage aux autres roues (11, 12, 13, 14) du véhicule (1),
**caractérisé en ce que** l'au moins un système de freinage auxiliaire (3) est un frein d'échappement ou un ralentisseur et que l'unité de commande (9) est agencée pour :
- déterminer des données de commande sur base d'au moins une règle prédéterminée pour les données de distribution, et pour commander l'au moins un système de freinage auxiliaire (3) et le mécanisme de couplage (8) conformément aux données de contrôle ;
- obtenir les données de distribution indiquant une direction de pilotage du véhicule (1) dans lequel l'unité de commande (9) est configurée pour déterminer des données de commande afin de commander le mécanisme de couplage (8) pour distribuer le couple de freinage de sorte que le véhicule (1) est piloté conformément à la direction de pilotage et ;
- déterminer des données de commande afin de commander le mécanisme de couplage (8) pour découpler au moins une roue (11, 12, 13, 14) du véhicule (1) agencée sur un extérieur du véhicule (1) par rapport à la direction de pilotage indiquée du véhicule (1), à partir de la force de freinage, afin de piloter le véhicule (1) dans la direction de pilotage.

2. Système (15) selon la revendication 1, dans lequel l'unité de commande (9) est agencée pour déterminer des données de commande afin de commander le mécanisme de couplage (8) pour découpler toutes les roues (11, 12, 13, 14) du véhicule (1) agencées à l'extérieur du véhicule (1) en référence à la direction de pilotage indiquée du véhicule (1), à partir de la force de freinage, afin de piloter le véhicule (1) dans la direction de pilotage.

3. Système (15) selon l'une quelconque des revendications 1 à 2, dans lequel l'unité de commande (9) est configurée pour déterminer des données de commande indiquant une distribution combinée d'une force de freinage à partir du système de freinage de service (2) et de la force de freinage à partir de l'au moins un système de freinage auxiliaire (3) afin de piloter le véhicule (1) dans la direction de pilotage, dans lequel l'unité de commande (9) est configurée pour commander le système de freinage de service (2), l'au moins un système de freinage auxiliaire (3) et/ ou le mécanisme de couplage (8) conformément à la distribution combinée déterminée.

4. Système (15) selon l'une quelconque des revendications 1 à 3, dans lequel l'unité de commande (9) est configurée pour déterminer des données de commande indiquant une période de temps Δt durant laquelle la force de freinage à partir de l'au moins un système de freinage auxiliaire (3) est distribuée, sur base des données de distribution, et dans lequel l'unité de commande (9) est en outre configurée pour commander l'au moins un système de freinage auxiliaire (3) pour distribuer la force de freinage durant la période de temps Δt.

5. Système (15) selon l'une quelconque des revendications 1 à 4, dans lequel l'unité de commande (9) comprend un modèle du véhicule (1), et est en outre configurée pour déterminer les données de commande sur base du modèle.

6. Système (15) selon l'une quelconque des revendications précédentes, dans lequel le mécanisme de couplage (8) comprend au moins un différentiel (81) et/ ou un couplage (82).

7. Système (15) selon l'une quelconque des revendications précédentes, dans lequel les données de distribution comprennent au moins un parmi : une direction de pilotage, un angle de pilotage, une vitesse de véhicule, des données à partir du système de freinage de service (2), des données à partir du système de freinage auxiliaire (3), des données indiquant une position du véhicule (1), un paramètre d'altitude, des données cartographiques ou des données indiquant une stabilité souhaitée du véhicule (1).

8. Véhicule (1) comprenant :
- un agencement de suspension de roue (17) pour la suspension d'une pluralité de roues (11, 12, 13, 14) ;
- un arbre de propulsion (5),
- un système de freinage de service (2),
- au moins un système de freinage auxiliaire (3) agencé pour générer un couple de freinage agissant sur l'arbre de propulsion (5) et un système (15) selon l'une quelconque des revendications 1 à 7.

9. Procédé pour la distribution d'un couple de freinage d'un véhicule (1) agencé avec un système de freinage de service (2), et au moins un système de freinage auxiliaire (3) agencé pour générer un couple de freinage agissant sur un arbre de propulsion (5) du véhicule (1), dans lequel l'au moins un système de freinage auxiliaire (3) est un frein d'échappement ou un ralentisseur, le procédé comprenant :
- l'obtention (S1) de données de distribution indicatives d'une distribution souhaitée du couple de freinage entre les roues (11, 12, 13, 14) du véhicule (1) ;
- la génération (S2) du couple de freinage sur l'arbre de propulsion (5) à partir de l'au moins un système de freinage auxiliaire (3) sur base des données de distribution, et
- le découplage (S3) d'au moins une roue (11, 12, 13, 14) du véhicule (1) à partir du couple de freinage de l'au moins un système de freinage auxiliaire (3) sur base des données de distribution, par lequel le couple de freinage est distribué aux autres roues (11, 12, 13, 14) du véhicule (1) ;
- la détermination de données de contrôle sur base d'au moins une règle prédéterminée pour les données de distribution, et la génération du couple de freinage sur l'arbre de propulsion (5) et le découplage de l'au moins une roue (11, 12, 13, 14) du véhicule (1) à partir de la force de freinage conformément aux données de contrôle et
dans lequel les données de distribution indiquent une direction de pilotage du véhicule (1), et dans lequel le procédé comprend la détermination de données de commande indiquant une distribution du couple de freinage correspondant à la direction de pilotage, et
dans lequel le découplage comprend la distribution du couple de freinage conformément aux données de commande par le découplage d'au moins une roue du véhicule, agencée sur un extérieur du véhicule en référence à la direction de pilotage indiquée du véhicule, à partir de la force de freinage, afin de piloter le véhicule dans la direction de pilotage.

10. Procédé selon l'une quelconque des revendications 9, comprenant la détermination de données de commande pour le découplage de toutes les roues (11, 12, 13, 14) du véhicule (1) agencé à l'extérieur du véhicule (1) en référence à la direction de pilotage indiquée du véhicule (1), à partir de la force de freinage.

11. Procédé selon l'une quelconque des revendications 9 à 10, comprenant la détermination de données de commande indiquant une distribution combinée d'une force de freinage à partir du système de freinage de service (2) et de la force de freinage à partir de l'au moins un système de freinage auxiliaire (3), et la commande du système de freinage de service (2), de l'au moins un système de freinage auxiliaire (3) et/ ou du mécanisme de couplage (8) conformément à la distribution combinée déterminée.

12. Procédé selon l'une quelconque des revendications 9 à 11, comprenant la détermination de données de contrôle indiquant une période de temps Δt durant laquelle la force de freinage à partir de l'au moins un système de freinage auxiliaire (3) est distribuée, sur base des données de distribution, et la distribution de la force de freinage durant la période de temps Δt.

13. Procédé selon la revendication 12, comprenant la détermination des données de commande sur base d'un modèle du véhicule (1).

14. Procédé selon l'une quelconque des revendications 9 à 13, comprenant la détermination de données de commande sur base d'au moins un parmi : une direction de pilotage, un angle de pilotage, une vitesse de véhicule, des données à partir du système de freinage de service (2), des données à partir du système de freinage auxiliaire (3), des données indiquant une position du véhicule (1), un paramètre d'altitude, des données cartographiques ou des données indiquant une stabilité souhaitée du véhicule (1).

15. Programme informatique P, dans lequel le programme informatique P comprend un code de programme informatique pour amener une unité de commande (9), ou un ordinateur connecté à l'unité de commande (9) à exécuter les étapes du procédé selon l'une quelconque des revendications 9 à 14.

16. Produit de programme informatique comprenant un code de programme informatique stocké sur un support lisible par ordinateur non transitoire pour exécuter les étapes du procédé selon l'une quelconque des revendications 9 à 14, lorsque le code de programme informatique est exécuté par une unité de commande (9) ou par un ordinateur connecté à l'unité de commande (9) .
